# EUROPEAN PATENT SPECIFICATION

(11) **EP 1 449 444 B1**
(45) Date of publication and mention of the grant of the patent: **09.09.2009**
(21) Application number: 04425102.3
(22) Date of filing: 18.02.2004
(51) Int. Cl.: A23N 12/00, B65G 15/00, A23N 15/00, A24B 1/04

(54) **Belt conveyor for leaves and other products for laying down the same products in a single layer**
Bandförderer für Blätter und andere Produkte um diese in einer Einzelschicht abzulegen
Bande de transport pour feuilles et autres produits pour les déposer en une seule couche

(30) Priority: 24.02.2003 IT rm20030075
(43) Date of publication of application: 25.08.2004
(73) Proprietor: Turatti s.r.l., 30014 Cavarzere (VE) (IT)
(72) Inventor: Turatti, Antonio, 30014 Cavarzere (VE) (IT)
(74) Representative: Iannone, Carlo Luigi

(56) References cited:
- US-A- 1 328 735
- US-A- 1 879 016
- US-A- 3 770 112
- US-A- 4 136 767
- US-A- 4 560 060

## Description

The present invention relates to a conveyor of leaves and other products on a belt for laying the same products as a single layer.

More specifically, the invention concerns a device allowing to lay on a belt leaves and other products for feeding purposes, so as to make it easier and faster possible transportation, lifting, cleaning, washing, drying, ecc.

At present, it exists the need in industrial processes to convey leaf products such as salads, lettuce, radicchio, spinaches and other food products, toward the transformation lines according an ordered mode, in order to simplify the working and/or packaging.

In fact, said products are generally provided loosely or within bags or tanks to the transformation industries by stores or directly from the fields.

First working step usually provides removal of external foreign bodies and washing of the products suitable for use.

During this step, it arises the need of uniformly distributing the product, also to more efficiently carry out the cleaning and visual choice operations.

In view of the above, it is well evident the needing of having at disposal a device as suggested by the present invention, allowing to collect leaf product from a conveyor belt on which it is loosely provided to transfer the same on another belt or transportation device, thus realising a single product layer.

In this context it is included the solution suggested according to the present invention.

US-3770112 describes a solution according to the preamble of claim 1.

It is therefore specific object of the present invention a conveyor of leaves and other products on a belt for laying the same products as a single layer, comprising
at least a suction hood having a surface provided with holes for passage of air flow,
at least a perforated collection belt provided with holes, dragging means by which said at least a collection belt slides along said perforated surface of said suction hood,
an air suction device, coupled with said hood, adapted to generate an air flow both through said holes of said surface of said at least a suction hood, and through said holes of said at least a collection belt, allowing the coupling on said at least a collection belt of a single layer of said leaves and other products due to their passage close to said at least a collection belt,
characterised in that said conveyor further comprises
means for washing said leaves and other products by water,
a space for collecting the water used for washing said leaves and other products placed below said collection belt,
means for drying said leaves and other products comprising a air suction device suitable to generate an air flow,
the water of said means for washing said leaves and other products flowing through said holes of said collection belt in order to be collected in said space;
and the air flow generated by said air suction device passing through the holes of said at least a collection belt.

Still according to the invention, said conveyor can provide a slidable belt to carry said leaves and other products close to said at least a collection belt.

Preferably, according to the invention, said slidable belt can be provided under said at least a collection belt.

Furthermore, according to the invention, said slidable belt is provided on a support structure.

Preferably, according to the invention, the perforated surface of said suction hood can be a curved surface.

Always according to the invention, said suction hood can comprise a belt for collecting impurities, said belt having holes with sizes lower than the sizes of the holes of said at least a collection belt.

Still according to the invention, said impurity collection belt can slide inside and parallel with respect to said at least a collection belt, allowing filtering impurities present in said laves and other products.

Always according to the invention, said impurity collection belt can place said impurities within a container.

Preferably, according to the invention, said means for washing said leaves and other products can be provided above and/or under said at least a collection belt.

Preferably, according to the invention, said mans for drying said leaves and other products can be provided on said at least a collection belt.

Furthermore, according to the invention, said drying means can comprise an air suction device.

Still according to the invention, said conveyor can comprise a first and a second collection belt section.

Always according to the invention, said first and a second collection belt section can be superimposed in such a way that said first collection belt section couples with a first side of said leaves and other products, and said second collection belt section couples with the other side of said leaves and other products.

Still according to the invention, air flow for coupling with said first and a second collection belt section can dry said leaves and other products on both sides.

Preferably, according to the invention, said two conveyor belts can be provided vertically.

Furthermore, according to the invention, said conveyor can comprise a space for collection of said leaves and other products taken from said collection belt.

Preferably, according to the invention, said air suction device can be a pump or a fan.

Still according to the invention, said leaves and other products collected by said collection belt can be brought again close said at last a collection belt.

The present invention will be now described, for illustrative but not limitative purposes, according to its preferred embodiments, with particular reference to the figures of the enclosed drawings, wherein:
Figure 1 shows a lateral view of a first embodiment of a device for conveying leaves and other products on a belt with a single layer distribution according to the invention;
Figure 2 is a top view of the conveying device of figure 1;
Figure 3 shows a lateral view of a second embodiment of a conveying device according to the invention;
Figure 4 is a top view of the conveying device of figure 3;
Figure 5 shows a lateral view of a third embodiment of a conveying device according to the invention;
Figure 6 shows a lateral view of a fourth embodiment of a conveying device according to the invention;
Figure 7 is a further lateral view of the conveying device of figure 6;
Figure 8 shows a lateral view of a fifth embodiment of a conveying device according to the invention;
Figure 9 is a further lateral view of the conveying device of figure 8; and
Figure 10 is a perspective view of the suction hood.

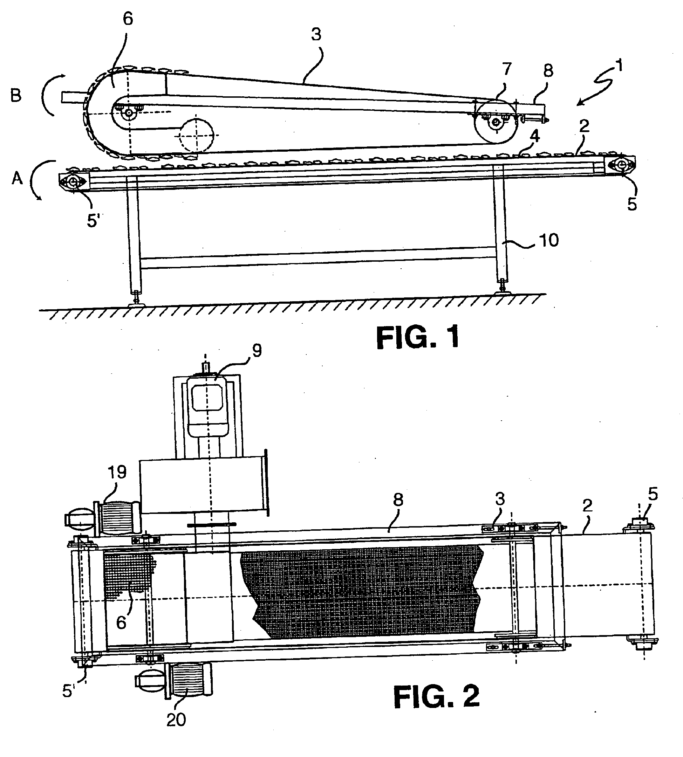

Making reference to figures 1 and 2, it can be observed conveyor, mainly comprised of a conveyor belt 2 and of the collection belt 3. Conveyor belt 2 is provided under the collection belt 3. on one end of the conveyor belt 2, product, i.e. leaves or other product, is charged in disorder. Said product 4 is thus dragged on the other end of the conveyor belt 2 rotating according to the direction indicated by arrow A, by the drive shafts 5 ad 5'.

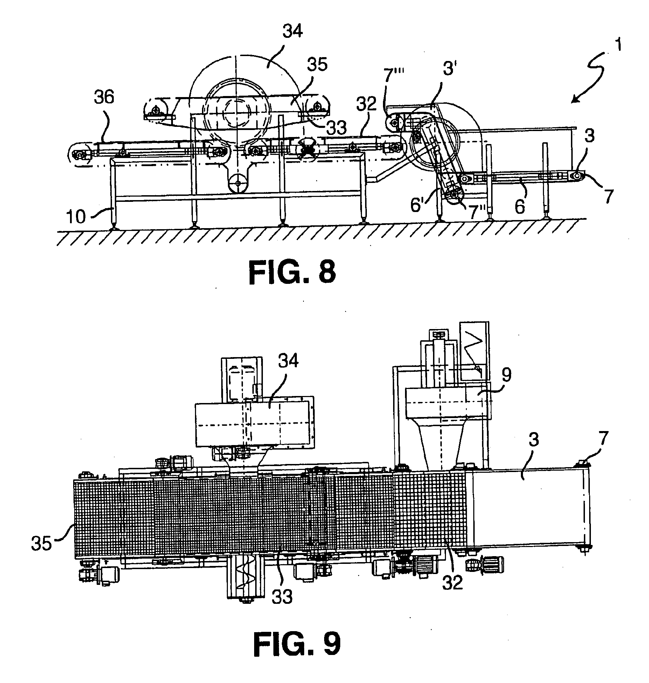

Collection belt 3, that is substantially comprised of a large hole network, slides above a suction hood 6 (shown in detail in figure 8), providing holes on the surface. Collection belt 3 slides on said suction hood 6 by a shaft 7 fixed on a support 8 according to the rotation direction B.

Once the product 4 arrives close the end of the conveyor belt 2, is sucked by the suction hood 6 and adhered to the collection belt 3. Vacuum is created between the suction hood 6 and the conveyor belt 3, thanks to an air suction pump 9. thus, in correspondence of the suction hood 6 a zone is realised keeping the product 4 adhering to the collection belt 3 while it slides, thanks to the negative pressure on the surface of said collection belt 3.

Consequently, product lays in such a way to realise a single layer on the collection belt 3. further, it is also possible to obtain a product drying effect, thanks to the air flow to which it is subjected.

Finally, it can be noted that the conveyor 1, in the embodiment described, is placed on a support 10, while the conveyor belt 2 and the collection belt 3 are driven by motors 19 and 20.

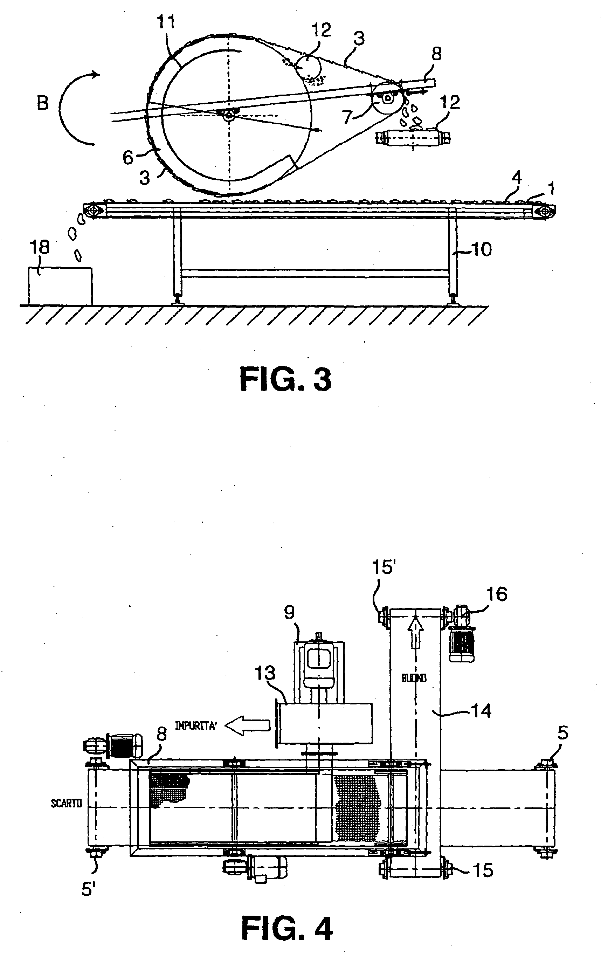

Figures 3 and 4 show an embodiment of the conveyor 1, providing also the feature of separating, insulating and ejecting impurities that can be present in the product 4.

As it is clear from the enclosed figures, it can be noted that the result is obtained by a modification of the suction hood 6, providing a collection belt 11 under the collection belt 3, said belt 11 having a filtering grain finer than that of said collection belt 3. due to the negative pressure induced by the air flow by the suction pump 9 on the suction hood 6, possible residual matter present in product 4 are collected and maintained adhering on the collection belt 11.

Collection belts 3 and 11 rotates parallel each other according to direction of arrow B and impurities are brought in a suitable container 12 sucked and ejected by a fan 13.

Product 4, that is placed as a single layer and depurated from the possible impurities is, in this embodiment, collected in a further collection belt 14 and driven by drive shafts 15 and 15' and a motor 16. instead, product 4 that is not sucked and placed on the collection belt 3, continues flowing until the end of the conveyor belt, accumulated within a container 18, and thus inserted again at the beginning of the circuit of the conveyor belt 2, to be placed as a single layer.

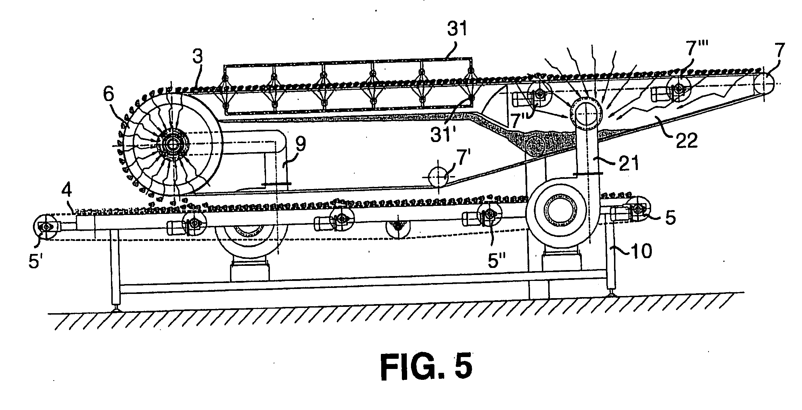

Figure 5 shows a conveyor 1, equivalent to the conveyor of figure 1, provided with the further functions of washing and drying the product 4.

Particularly, once the product 4 has been placed as a single layer on the collection belt 3, it is made passing through a washing device 31, subjecting the same to a series of water jets from above and from bass. Washing water is then collected within a suitable space 22.

Finally, product 4 is strook by a further air flow, directed downward, induced by the pump 21.collection belt 3 slides between the suction hood 6 and the shafts 7, 7', 7" and 7"', in such a way to create a space within which said space 22 can be provided.

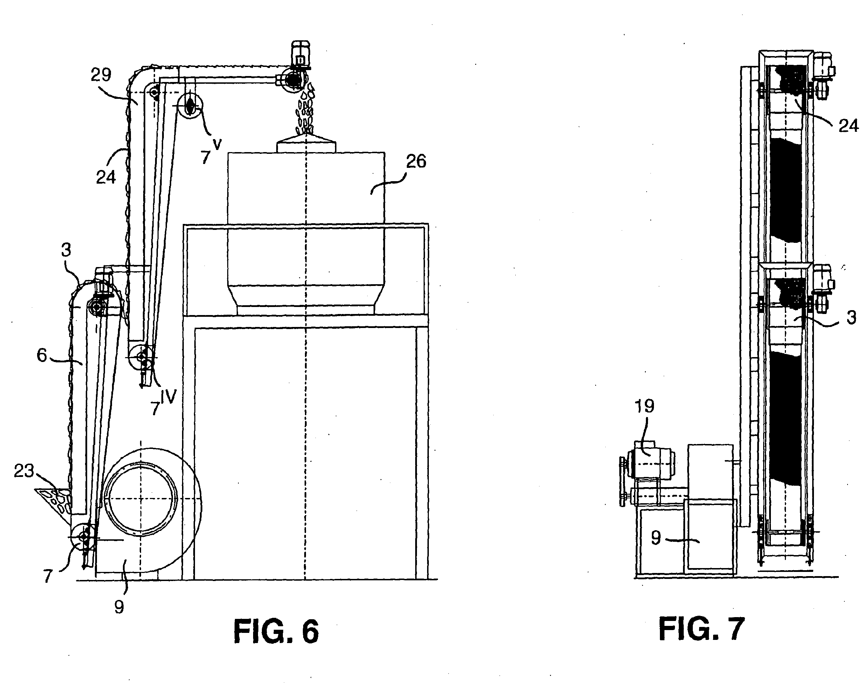

Figures 6 and 7 show an alternative embodiment of the conveyor 1, allowing the drying of the product 4 on both sides.

Particularly, conveyor 1, unlike of the ones described in the above, works as an elevator according to a vertical direction, however maintaining the same principles to realise a single layer of the product 4 on the conveyor belt.

Observing the figures in detail, it can be noted that product 4 is taken from a hopper 23 directly from the vertical collection belt 3, sliding on the suction hood 6. Air flow, generated by the pump 9, directed on the product 4, allows its drying on the first side. Product 4 is then laid down on another collection belt 24, in this case too a vertical belt, on which it is kept thanks to a further suction hood 25 and to the air flow generated by the latter.

Product 4 is now placed as a single layer on the collection belt 24, but rests on side opposite to the side on which it was rested while flowing on the collection belt 3. in this way, flow generated by the suction hood 25 allows drying of the other side of product 4.

Finally, product 4, dried on both sides and placed as a single layer, can be placed on a new conveyor belt or visually inspected and/or introduced within a container 26, as in figure 6.

Figures 8 and 9 show and alternative embodiment of the conveyor 1, allowing the ejection of foreign matter from product 4 by a double filtering. Particularly, product 4, placed as single layer on the collection belt 3 by pressure generated by the air flow from pump 9, is then distributed on the collection belt 3', making the heavier foreign matter falling. Air flows on the collection belts 3, 3' are obtained by the suction hoods 6, 6'. From the collection belt 3', product 4 passes to a further conveyor belt 32, that, vibrating, allow a homogeneous distribution of the product 4 on the surface of the same belt. Thus product is again collected by a collection belt 33, allowing a further filtering of the product, avoiding lifting residual impurities such as insects or little woods. Lifting occurs by the pressure from the pump 34 through the suction hood 35.

Collection belt 33, providing sloped sides, transports the product up to a collection belt 36 on which it falls by gravity, not being provided any air flow in the area where belts are superimposed.

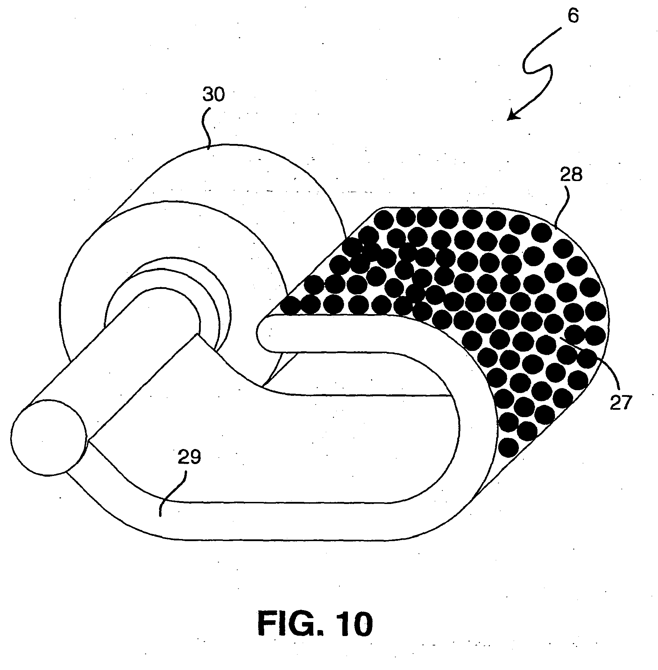

Finally, figure 10 shows the suction hood 6. particularly, it can be seen surface 27 on which conveyor belt 3 or 24 slides, and on which air suction holes 28 are realised, said air being sucked within the tube 29. air flow is generated by the pump 9 or by a fan inserted within the cavity.

On the basis of the previous specification, it can be observed that the basic feature is that of creating a depression on a conveyor belt so as to make the leaf product adhering and placing the same as a single layer.

Present invention has the advantage of making it possible to have the product ready for complex operations thanks to its more precise positioning, and at the same time to be able to simply add the functions of filtering impurities and drying the product.

Furthermore, by the present invention, product can be also lifted according to a vertical direction, maintaining a continuous and according to a single layer disposition feeding of the product. In fact, positioning of the product according to a single layer allows to ease their inspection and their eventual analyses by optical selection devices.

Another advantage of the invention is that of filtering both foreign matter with large sizes and weight, and sand particles and/or insects by suction.

Possibility of implementing the device according to vertical orientation allows a remarkable saving of space or a better adaptability to already existing lines.

Finally, product can be cooled and/or subjected to treatment during its transportation and/or lifting.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Conveyor (1) of leaves and other products (4) on a belt for laying the same products as a single layer, comprising
at least one suction hood (6) having a surface (27) provided with holes (28) for passage of air flow,
at least one perforated collection belt (3) provided with holes,
dragging means (7, 19) by which said at least one collection belt (3) slides along said perforated surface of said suction hood (6),
an air suction device (9), coupled with said hood (6), adapted to generate an air flow both through said holes (28) of said surface (27) of said at least one suction hood (6), and through said holes of said at least one collection belt (3), allowing the coupling on said at least one collection belt (3) of a single layer of said leaves and other products (4) due to their passage close to said at least one collection belt (3),
**characterised in that** said conveyor (1) further comprises
means (31) for washing said leaves and other products (4) by water,
a space for collecting the water used for washing said leaves and other products placed below said collection belt (3),
means for drying said leaves and other products (4) comprising an air suction device (21) suitable to generate an air flow,
the water of said means (31) for washing said leaves and other products (4) flowing through said holes of said collection belt (3) in order to be collected in said space;
and the air flow generated by said air suction device (21) passing through the holes of said at least one collection belt (3).

2. Conveyor of leaves and other products according to claim 1, **characterised in that** said conveyor provides a slidable belt to carry said leaves and other products close to said at least one collection belt.

3. Conveyor of leaves and other products according to claim 2, **characterised in that** said slidable belt is provided under said at least one collection belt.

4. Conveyor of leaves and other products according to one of the claims 2 - 3, **characterised in that** said slidable belt is provided on a support structure.

5. Conveyor of leaves and other products according to one of the preceding claims, **characterised in that** the perforated surface of said suction hood is a curved surface.

6. Conveyor of leaves and other products according to one of the preceding claims, **characterised in that** said suction hood comprises a belt for collecting impurities, said belt having holes with sizes lower than the sizes of the holes of said at least one collection belt.

7. Conveyor of leaves and other products according to claim 6, **characterised in that** said impurity collection belt slides inside and parallel with respect to said at least one collection belt, allowing filtering impurities present in said leaves and other products.

8. Conveyor of leaves and other products according to one of the claims 6 and 7, **characterised in that** said impurity collection belt places said impurities within a container.

9. Conveyor of leaves and other products according to claim 1, **characterised in that** said means for washing said leaves and other products are provided above and/or under said at least one collection belt.

10. Conveyor of leaves and other products according to claim 1, **characterised in that** said means for drying said leaves and other products are provided on said at least one collection belt.

11. Conveyor of leaves and other products according to one of the preceding claims, **characterised in that** said conveyor comprises a first and a second collection belt section.

12. Conveyor of leaves and other products according to claim 11, **characterised in that** said first and second collection belt section are superimposed in such a way that said first collection belt section couples with a first side of said leaves and other products, and said second collection belt section couples with the other side of said leaves and other products.

13. Conveyor of leaves and other products according to one of the claims 11 and 12, **characterised in that** air flow for coupling with said first and second collection belt section dries said leaves and other products on both sides.

14. Conveyor of leaves and other products according to one of the claims, **characterised in that** said two conveyor belts are provided vertically.

15. Conveyor of leaves and other products according to one of the preceding claims, **characterised in that** said conveyor comprises a space for collection of said leaves and other products taken from said collection belt.

16. Conveyor of leaves and other products according to one of the preceding claims, **characterised in that** said air suction device is comprised of a pump.

17. Conveyor of leaves and other products according to one of the preceding claims 1 - 15, **characterised in that** said air suction device is comprised of a fan.

18. Conveyor of leaves and other products according to one of the preceding claims, **characterised in that** it comprises means for vibrating said collection belts and/or conveyor belts to more uniformly laying said leaves and other products on said collection belts and/or conveyor belts.

19. Conveyor of leaves and other products according to one of the preceding claims, **characterised in that** said leaves and other products collected by said collection belt are brought again close said at least one collection belt.

## Patentansprüche

1. Förderer (1) für Blätter und andere Produkte (4) auf einem Band, um diese Produkte als eine Einzelschicht zu legen, wobei der Förderer umfasst:
wenigstens eine Ansaughaube (6) mit einer Oberfläche (27), die mit Löchern (28) für den Durchgang einer Luftströmung versehen ist,
wenigstens ein perforiertes Sammelband (3), das mit Löchern versehen ist,
Zugmittel (7, 19), durch die das wenigstens eine Sammelband (3) entlang der perforierten Oberfläche der Ansaughaube (6) gleitet,
eine Luftansaugvorrichtung (9), die mit der Haube (6) gekoppelt ist und die so ausgelegt ist, dass sie sowohl durch die Löcher (28) der Oberfläche (27) der wenigstens einen Ansaughaube (6) als auch durch die Löcher des wenigstens einen Sammelbands (3) eine Luftströmung erzeugt, die das Koppeln einer Einzelschicht der Blätter und anderen Produkte (4) auf dem wenigstens einen Sammelband (3) wegen ihres Durchgangs in der Nähe des wenigstens einen Sammelbands (3) ermöglicht,
**dadurch gekennzeichnet, dass** der Förderer (1) ferner umfasst:
Mittel (31) zum Waschen der Blätter und anderen Produkte (4) durch Wasser,
einen Raum zum Sammeln des Wassers, das zum Waschen der Blätter und anderen Produkte verwendet wird, der unter dem Sammelband (3) angeordnet ist,
Mittel zum Trocknen der Blätter und anderen Produkte (4), die eine Luftansaugvorrichtung (21) umfassen, die zum Erzeugen einer Luftströmung geeignet ist,
wobei das Wasser der Mittel (31) zum Waschen der Blätter und anderen Produkte (4) durch die Löcher des Sammelbands (3) fließt, damit es in dem Raum gesammelt wird;
und die durch die Luftansaugvorrichtung (21) erzeugte Luftströmung durch die Löcher des wenigstens einen Sammelbands (3) geht.

2. Förderer für Blätter und andere Produkte nach Anspruch 1, **dadurch gekennzeichnet, dass** der Förderer ein gleitfähiges Band bereitstellt, um die Blätter und anderen Produkte in der Nähe des wenigstens einen Sammelbands zu transportieren.

3. Förderer für Blätter und andere Produkte nach Anspruch 2, **dadurch gekennzeichnet, dass** das gleitfähige Band unter dem wenigstens einen Sammelband vorgesehen ist.

4. Förderer für Blätter und andere Produkte nach einem der Ansprüche 2-3, **dadurch gekennzeichnet, dass** das gleitfähige Band an einer Stützstruktur vorgesehen ist.

5. Förderer für Blätter und andere Produkte nach einem der vorhergehenden Ansprüche, **dadurch gekennzeichnet, dass** die perforierte Oberfläche der Ansaughaube eine gekrümmte Oberfläche ist.

6. Förderer für Blätter und andere Produkte nach einem der vorhergehenden Ansprüche, **dadurch gekennzeichnet, dass** die Ansaughaube ein Band zum Sammeln von Verunreinigungen umfasst, wobei das Band Löcher mit Größen aufweist, die kleiner als die Größen der Löcher des wenigstens einen Sammelbands sind.

7. Förderer für Blätter und andere Produkte nach Anspruch 6, **dadurch gekennzeichnet, dass** das Verunreinigungssammelband in Bezug auf das wenigstens eine Sammelband innerhalb und parallel gleitet, was in den Blättern und anderen Produkten vorhandene Verunreinigungen zu filtern ermöglicht.

8. Förderer für Blätter und andere Produkte nach einem der Ansprüche 6 und 7, **dadurch gekennzeichnet, dass** das Verunreinigungssammelband die Verunreinigungen in einem Behälter anordnet.

9. Förderer für Blätter und andere Produkte nach Anspruch 1, **dadurch gekennzeichnet, dass** die Mittel zum Waschen der Blätter und anderen Produkte über und/oder unter dem wenigstens einen Sammelband vorgesehen sind.

10. Förderer für Blätter und andere Produkte nach Anspruch 1, **dadurch gekennzeichnet, dass** die Mittel zum Trocknen der Blätter und anderen Produkte an dem wenigstens einen Sammelband vorgesehen sind.

11. Förderer für Blätter und andere Produkte nach einem der vorhergehenden Ansprüche, **dadurch gekennzeichnet, dass** der Förderer einen ersten und einen zweiten Sammelbandabschnitt umfasst.

12. Förderer für Blätter und andere Produkte nach Anspruch 11, **dadurch gekennzeichnet, dass** der erste und der zweite Sammelbandabschnitt in der Weise übereinanderliegen, dass der erste Sammelbandabschnitt mit einer ersten Seite der Blätter und anderen Produkte koppelt und der zweite Sammelbandabschnitt mit der anderen Seite der Blätter und anderen Produkte koppelt.

13. Förderer für Blätter und andere Produkte nach einem der Ansprüche 11 und 12, **dadurch gekennzeichnet, dass** die Luftströmung zum Koppeln mit dem ersten und zweiten Sammelbandabschnitt die Blätter und anderen Produkte auf beiden Seiten trocknet.

14. Förderer für Blätter und andere Produkte nach einem der Ansprüche, **dadurch gekennzeichnet, dass** die zwei Förderbänder vertikal vorgesehen sind.

15. Förderer für Blätter und andere Produkte nach einem der vorhergehenden Ansprüche, **dadurch gekennzeichnet, dass** der Förderer einen Raum für die Sammlung der dem Sammelband entnommenen Blätter und anderen Produkte umfasst.

16. Förderer für Blätter und andere Produkte nach einem der vorhergehenden Ansprüche, **dadurch gekennzeichnet, dass** die Luftansaugvorrichtung eine Pumpe umfasst.

17. Förderer für Blätter und andere Produkte nach einem der vorhergehenden Ansprüche 1-15, **dadurch gekennzeichnet, dass** die Luftansaugvorrichtung ein Gebläse umfasst.

18. Förderer für Blätter und andere Produkte nach einem der vorhergehenden Ansprüche, **dadurch gekennzeichnet, dass** sie Mittel umfasst, um die Sammelbänder und/oder Förderbänder vibrieren zu lassen, damit die Blätter und anderen Produkte auf den Sammelbändern und/oder Förderbändern gleichmäßiger gelegt werden.

19. Förderer für Blätter und andere Produkte nach einem der vorhergehenden Ansprüche, **dadurch gekennzeichnet, dass** die durch das Sammelband gesammelten Blätter und anderen Produkte wieder in die Nähe des wenigstens einen Sammelbands gebracht werden.

## Revendications

1. Convoyeur (1) de feuilles et autres produits (4) sur une courroie afin de poser lesdits produits en une couche unique, comprenant :
au moins une hotte d'aspiration (6) présentant une surface (27) muni de trous (28) pour le passage d'un flux d'air,
au moins une courroie de collecte perforée (3) munie de trous,
un moyen de dragage (7, 19) par lequel ladite au moins une courroie de collecte (3) coulisse le long de ladite surface perforée de ladite hotte d'aspiration (6),
un dispositif d'aspiration de l'air (9), couplé à ladite hotte (6), conçu pour générer un flux d'air à travers lesdits trous (28) de ladite surface (27) de la au moins une hotte d'aspiration (6), et à travers lesdits trous de ladite au moins une courroie de collecte (3), permettant le couplage sur ladite au moins une courroie de collecte (3) d'une couche unique desdites feuilles et autres produits (4) en raison de leur passage à proximité de ladite au moins une courroie de collecte (3),
**caractérisé en ce que** ledit convoyeur (1) comprend en outre
des moyens (31) de nettoyage desdites feuilles et desdits autres produits (4) à l'aide d'eau,
un espace de collecte des eaux usées pour le nettoyage desdites feuilles et desdits autres produits placés sous ladite courroie de collecte (3),
des moyens de séchage desdites feuilles et desdits autres produits (4) comprenant un dispositif d'aspiration de l'air (21) conçu pour générer un flux d'air,
l'eau desdits moyens (31) de nettoyage desdites feuilles et desdits autres produits (4) s'écoulant à travers lesdits trous de ladite courroie de collecte (3) afin d'être collectée dans ledit espace ;
et le flux d'air généré par ledit dispositif d'aspiration (21) passant à travers les trous de ladite au moins une courroie de collecte (3).

2. Convoyeur de feuilles et autres produits selon la revendication 1, **caractérisé en ce que** ledit convoyeur fournit une courroie coulissante pour transporter lesdites feuilles et lesdits autres produits à proximité de ladite au moins une courroie de collecte.

3. Convoyeur de feuilles et autres produits selon la revendication 2, **caractérisé en ce que** ladite courroie coulissante est disposée sous ladite au moins une courroie de collecte.

4. Convoyeur de feuilles et autres produits selon l'une des revendications 2 et 3, **caractérisé en ce que** ladite courroie coulissante est disposée sur une structure de support.

5. Convoyeur de feuilles et autres produits selon l'une des revendications précédentes, **caractérisé en ce que** la surface perforée de ladite hotte d'aspiration est une surface incurvée.

6. Convoyeur de feuilles et autres produits selon l'une des revendications précédentes, **caractérisé en ce que** ladite hotte d'aspiration comprend une courroie de collecte des impuretés, ladite courroie présentant des trous de tailles inférieures aux tailles des trous de ladite au moins une courroie de collecte.

7. Convoyeur de feuilles et autres produits selon la revendication 6, **caractérisé en ce que** ladite courroie de collecte des impuretés coulisse à l'intérieur de et parallèlement à ladite au moins une courroie de collecte, permettant le filtrage des impuretés présentes dans lesdites feuilles et lesdits autres produits.

8. Convoyeur de feuilles et autres produits selon l'une des revendications 6 et 7, **caractérisé en ce que** ladite courroie de collecte des impuretés place lesdites impuretés dans un conteneur.

9. Convoyeur de feuilles et autres produits selon la revendication 1, **caractérisé en ce que** lesdits moyens de nettoyage desdites feuilles et desdits autres produits sont disposés au-dessus et/ou en dessous de ladite au moins une courroie de collecte.

10. Convoyeur de feuilles et autres produits selon la revendication 1, **caractérisé en ce que** lesdits moyens de séchage desdites feuilles et desdits autres produits sont situés sur ladite au moins une courroie de collecte.

11. Convoyeur de feuilles et autres produits selon l'une des revendications précédentes, **caractérisé en ce que** ledit convoyeur comprend une première et une seconde sections de courroie de collecte.

12. Convoyeur de feuilles et autres produits selon la revendication 11, **caractérisé en ce que** lesdites première et seconde sections de courroie de collecte sont superposées de manière à ce que ladite première section de courroie de collecte soit couplée à un premier côté desdites feuilles et desdits autres produits, et à ce que ladite seconde section de courroie de collecte soit couplée à l'autre côté desdites feuilles et desdits autres produits.

13. Convoyeur de feuilles et autres produits selon l'une des revendications 11 et 12, **caractérisé en ce que** le flux d'air destiné au couplage avec lesdites première et seconde sections de courroie de collecte sèche lesdites feuilles et lesdits autres produits des deux côtés.

14. Convoyeur de feuilles et autres produits selon l'une des revendications, **caractérisé en ce que** lesdites deux courroies de convoyeur sont disposées verticalement.

15. Convoyeur de feuilles et autres produits selon l'une des revendications précédentes, **caractérisé en ce que** ledit convoyeur comprend un espace de collecte desdites feuilles et desdits autres produits pris sur ladite courroie de collecte.

16. Convoyeur de feuilles et autres produits selon l'une des revendications précédentes, **caractérisé en ce que** ledit dispositif d'aspiration de l'air est constitué par une pompe.

17. Convoyeur de feuilles et autres produits selon l'une des revendications 1 à 15, **caractérisé en ce que** ledit dispositif d'aspiration de l'air est constitué d'un ventilateur.

18. Convoyeur de feuilles et autres produits selon l'une des revendications précédentes, **caractérisé en ce qu'**il comprend un moyen permettant de faire vibrer lesdites courroies de collecte et/ou courroies de convoyeur pour poser de manière plus uniforme lesdites feuilles et lesdits autres produits sur lesdites courroies de collectes et/ou courroies de convoyeur.

19. Convoyeur de feuilles et autres produits selon l'une des revendications précédentes, **caractérisé en ce que** lesdites feuilles et lesdits autres produits collectés par ladite courroie de collecte sont de nouveau amenés à proximité de ladite au moins une courroie de collecte.
